Europäisches Patentamt

European Patent Office

Office européen des brevets

(19)

(11) Publication number: **0 458 571 A2**

# EUROPEAN PATENT APPLICATION

(12)

(21) Application number: **91304544.9**

(22) Date of filing: **20.05.91**

(51) Int. Cl.⁵: **G06F 15/72**

(30) Priority: **21.05.90 JP 129187/90**

(43) Date of publication of application:
**27.11.91 Bulletin 91/48**

(84) Designated Contracting States:
**DE FR GB IT**

(71) Applicant: **CANON KABUSHIKI KAISHA**
**30-2, 3-chome, Shimomaruko, Ohta-ku**
**Tokyo (JP)**

(72) Inventor: **Migishima, Isao, c/o Canon**
**Kabushiki Kaisha**
**30-2, 3-chome, Shimomaruko**
**Ohata-ku, Tokyo (JP)**

(74) Representative: **Beresford, Keith Denis Lewis**
**et al**
**BERESFORD & Co. 2-5 Warwick Court High**
**Holborn**
**London WC1R 5DJ (GB)**

(54) **Image processing method and apparatus.**

(57)   An image processing apparatus to form an outline shape of a character or a figure comprises: a memory to store a shape of pattern as outline information; a reading circuit to read out the outline information stored in the memory; a forming circuit for assigning one of a plurality of brightnesses to each pixel on the basis of the read-out outline information and for forming an image; and an output device to output the formed image to the outside. With the apparatus, a difference between the outline after the modification and the shape of the image which is formed by the outline can be reduced.

—501

# F I G. 7

EP 0 458 571 A2

## BACKGROUND OF THE INVENTION

### Field of the Invention

The present invention relates to an image processing apparatus for forming outline shapes of, for instance, a character and a figure.

### Related Background Art

Hitherto, in the case of obtaining an image by executing a modifying process to a character or a figure on the basis of information of an outline shape thereof by some calculating means, pixels at least a part of which are occupied by an outline region after completion of the modifying process are processed in a binary state indicative of either a mode to make the pixels valid or a mode to make the pixels invalid.

In the above conventional method, however, the outline of the character or figure which is obtained after the execution of the modifying process by some calculating means does not always completely coincide with a shape constructed by pixels. Therefore, there is a drawback such that a difference occurs between the outline obtained by the modifying process by the calculating means and the shape derived as a result of the process of the pixels. That is, among the pixels at least a part of which are occupied by an outline, in the case where a part of a certain pixel is included in the outline, it is determined by a predetermined method whether the pixel is valid or invalid.

Such a difference causes a large problem as a ratio between the pixel and a size of the outline after the execution of the modifying process decreases. For example, in the case of the pixel of a size of 1/300 inch, a difference between the size of character comprising 20 pixels which has been obtained by the modifying process and the shape of original outline is larger than a difference of the size of character comprising 40 pixels which has been derived by the modifying process and the shape of original outline.

## SUMMARY OF THE INVENTION

The invention is made in consideration of the drawbacks of the conventional method mentioned above and it is an object of the invention to provide image processing method and apparatus which can reduce a difference between an outline after a modification and a shape of image which is formed by the outline.

To solve the above problems and to accomplish the above object, according to the invention, there are provided image processing method and apparatus comprising: memory means for storing shapes of a character and a figure as outline information; reading means for reading out the outline information stored in the memory means; forming means for assigning one of at least two kinds of brightnesses to each pixel on the basis of the read outline information and for forming an image; and outputting means for outputting the formed image to the outside.

The invention provides image processing method and apparatus, in which memory means stores shapes of a character and a figure as outline information; reading means reads out the outline information stored in the memory means, forming means assigns one of at least two kinds of brightnesses to each pixel on the basis of the read outline information and forms an image, and outputting means outputs the formed image to the outside.

## BRIEF DESCRIPTION OF THE DRAWINGS

Fig. 1 is a block diagram showing a construction of an image processing apparatus of an embodiment;

Fig. 2 is a diagram showing an example of an outline of a character constructed by outline control points;

Fig. 3 is a diagram showing an example in the case where the outline of Fig. 2 has been modified and temporarily formed in a pixel pattern forming memory 5;

Fig. 4 is a diagram showing an example in the case where a conventional pixel pattern has been dot developed on the basis of the outline of Fig. 3;

Fig. 5 is a diagram showing an example in the case where a pixel pattern of the embodiment has been dot developed on the basis of the outline of Fig. 3;

Fig. 6 is a diagram showing only the pixel pattern of Fig. 4;

Fig. 7 is a diagram showing only the pixel pattern of Fig. 5; and

Fig. 8 is a flowchart for explaining an outputting operation of a pixel pattern by a CPU 2 of the embodiment.

## DETAILED DESCRIPTION OF THE PREFERRED EMBODIMENT

A preferred embodiment of the invention will be described in detail hereinbelow with reference to the drawings. The invention can be applied to an apparatus or can be also applied to the case where the invention is accomplished by supplying a program to an apparatus or a system.

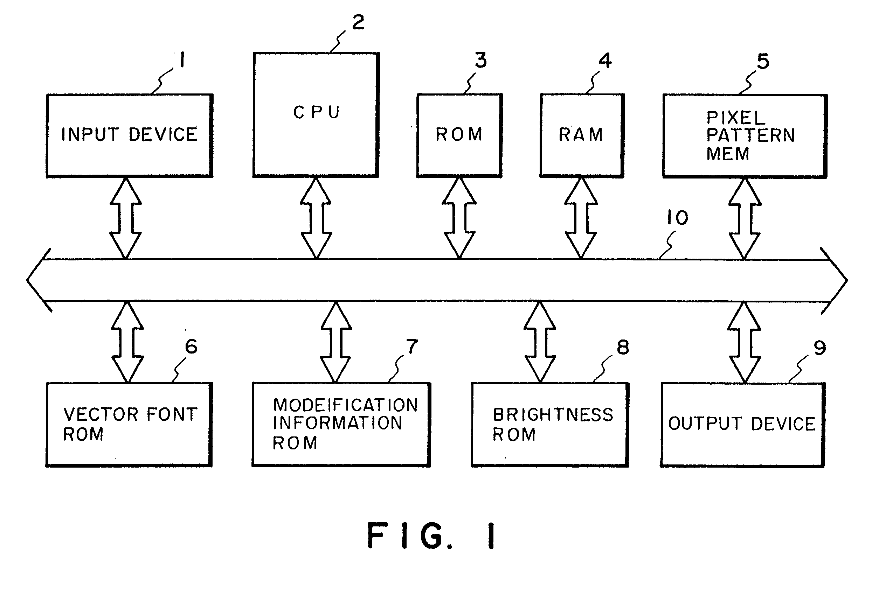

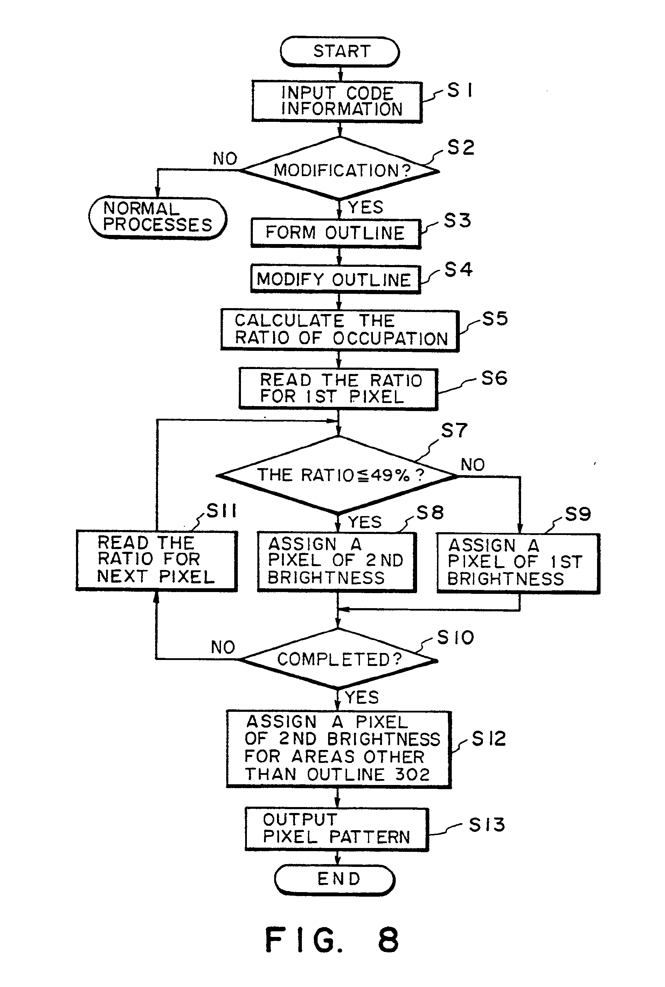

Fig. 1 is a block diagram showing a construction of an image processing apparatus of the embodiment. In the diagram, reference numeral 1 denotes an input device for supplying code information indicative of outlines of a character and a figure from an outside; 2 a CPU to control the whole apparatus; 3 a ROM in which a control program according to a flowchart shown in Fig. 8, which will be explained hereinlater, an error processing program, and the like have been stored; and 4 a RAM which is used as work areas for various programs and a temporary lay-by area in an error process.

Reference numeral 5 denotes a pixel pattern memory for dot developing a pattern (pixel pattern) constructed by pixels of a character or a figure and for storing; 6 a vector font ROM in which codes derived by encoding pattern information corresponding to code information have been stored; 7 a modification information ROM in which modification information to modify a fundamental outline shape such as to execute or realize an enlargement, a reduction, a rotation, a thick pattern, a thin pattern, a painting brush, or the like has been stored; and 8 a brightness information ROM in which brightness information which gives a brightness to each pixel which is developed into the pixel pattern memory 5 has been stored. Two kinds of brightness information, which will be explained hereinlater, have been stored in the ROM 8.

Reference numeral 9 denotes an output device for outputting the pattern developed in the memory 5 to the outside. The output device 9 can perform density expression in accordance with a brightness or the like, which will be explained hereinlater. For instance, in a laser beam printer, a device which can express 256 gradations has been proposed by the same applicant of the present invention. Reference numeral 10 denotes a bus line to transmit an address signal, data, and a control signal in the apparatus.

An outline of the embodiment will now be described.

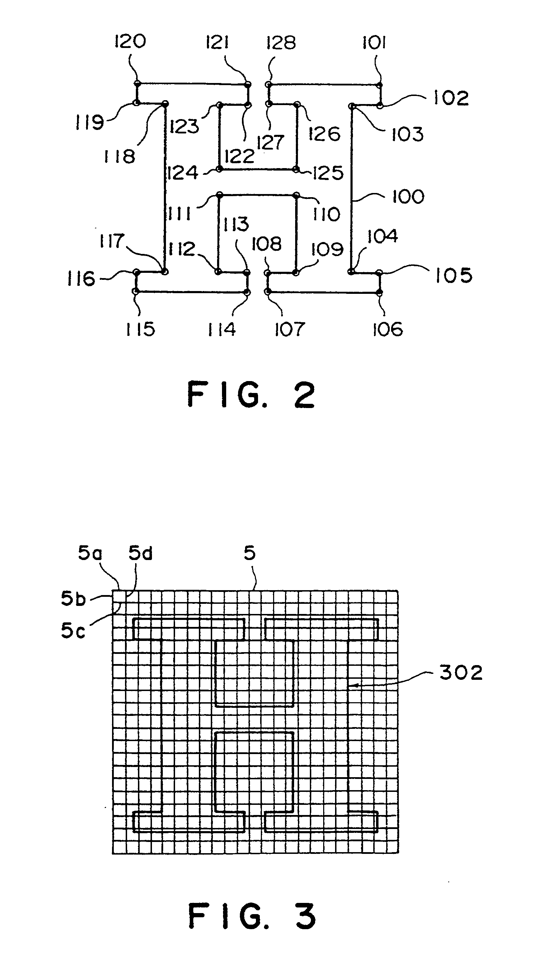

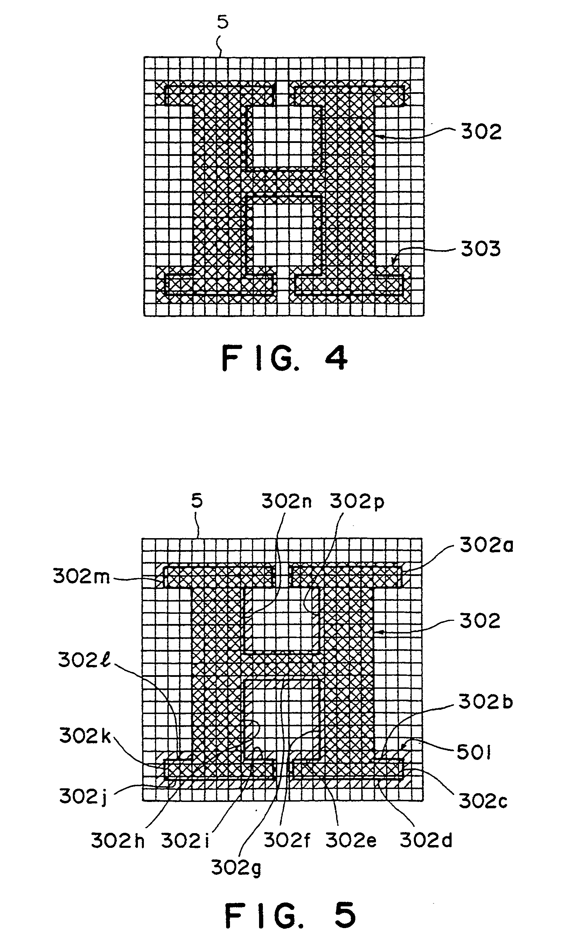

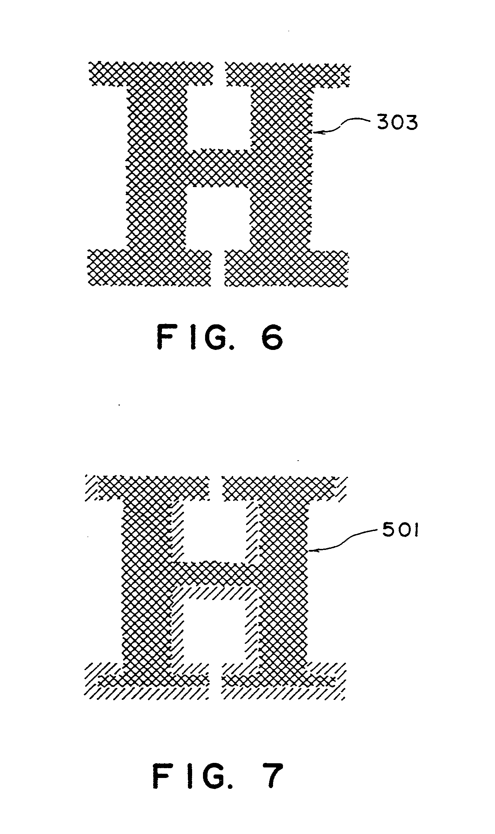

Fig. 2 is a diagram showing an example of an outline of a character which is constructed by outline control points. Fig. 3 is a diagram showing an example in the case where the outline of Fig. 2 has been modified and temporarily formed in the pixel pattern memory 5. Fig. 4 is a diagram showing a conventional example in the case where a pixel pattern has been dot developed on the basis of the outline in Fig. 3. Fig. 5 is a diagram showing an example in the case where a pixel pattern has been dot developed according to the embodiment on the basis of the outline in Fig. 3. Fig. 6 is a diagram showing only the pixel pattern in Fig. 4. Fig. 7 is a diagram showing only the pixel pattern in Fig. 5.

In Figs. 2 to 5, reference numerals 101 to 128 denote outline control points to form an outline of a character "H"; 100 indicates an outline of the character "H" which has temporarily formed on the basis of the information of the outline control points 101 to 128; 302 an outline of the character "H" after an arbitrary modifying process has been performed on the basis of the information of the outline control points 101 to 128; 5a, 5b, 5c and 5d lattice lines which surround one pixel size in the pixel pattern memory 5; and 303 and 501 a pixel pattern according to the conventional method and a pixel pattern according to the method of the embodiment. The pixel pattern 303 is an image in which pixels at least a part of which are occupied by a region surrounded by the outline 302 have been painted (dot developed) by a first brightness (shown by meshed regions in Fig. 4). The pixel pattern 501 is an image in which the pixels of an occupation amount of 49% or less in the region surrounded by the outline 302 have been painted by the second brightness (shown by hatched regions in Fig. 5) and the inner area (pixels of an occupation amount of 50% or more) surrounded by the painted pixels has been painted by the first brightness (shown by meshed regions in Fig. 5). The first brightness is higher than the second brightness. The second brightness is set to the half of the first brightness. Reference numerals 302a to 302n and 302p denote line serpents of the outline 302 which overlaps the pixels which have been painted by the second brightness.

First, there is case where the provisional outline 302 which is derived after modifying the fundamental outline 100 which had been formed on the basis of the information of the outline control points 101 to 128 does not always coincide so as to be aligned with the lattice lines 5a to 5d in the pixel pattern memory 5 as shown in Fig. 3. Hitherto, as shown in Fig. 4, the pixel pattern 303 has a shape in which the pixels at least a part of which have been occupied by the region surrounded by the outline 302 have been painted by the first brightness (shown by meshed regions in Fig. 4). In this case, as shown in Fig. 6, the upper and lower portions of the pixel pattern 303 are not symmetrical and the pattern 303 changes to a shape which is fairly different from the original shape shown by the outline 302. Such a shape difference occurs because the pixels whose occupation ratio is equal to 100% and the pixels whose occupation ratio is equal to 1% are also similarly set to be effective. On the other hand, according to the embodiment, like the pixel pattern 501 shown in Fig. 7, two kinds of brightnesses (first and second brigntnesses) are assigned in accordance with the occupation ratio and a difference with the outline 302 which is conspicuous in the conventional pixel pattern 303 is suppressed by the brightness.

The operation of the embodiment will now be described.

Fig. 8 is a flowchart for explaining the outputting operation of the pixel pattern by the CPU 2 in the embodiment. An example of the character "H" mentioned above will now be described here.

First, when code information of the character "H" is given (step S1) and if an instruction to modify the outline is generated (step S2), a pixel pattern producing process of the embodiment is started by processes in step S3 and subsequent steps. On the other hand, if there is no instruction for modification, the ordinary processes are executed.

First, in step S3, the outline control points 101 to 128 are read out of the vector font ROM 6 on the basis of the input code information and coordinate points constructing the fundamental outline 100 are calculated. A modifying process according to the content of the instruction of the outline modification is executed and the coordinate points (moving points of the outline control points 101 to 128) by the modification are calculated (step S4). The outline 302 after completion of the modifying process is formed as mentioned above.

Subsequently, with respect to the pixels at least a part of which are occupied by the area surrounded by the outline 302, a ratio (%) of occupation of each pixel is calculated and stored into the RAM 4 (step S5). In the image forming direction which directs from the start point (moving point after the modification of the outline control point 101) of the outline 302 to the next point (moving point after the modification of the outline control point 102), a ratio of occupation of the pixel (first pixel) which has first been occupied is read out of the RAM 4 (step S6).

If the occupation ratio in the case of the first pixel which has been read out is equal to or less than 49% (step S7), the pixel of the second brightness (half brightness of the oridinary brigntness) is assigned into the pixel pattern memory 5 (step S8). If the occupation ratio is equal to or larger than 50%, the pixel of the first brightness (ordinary brightness) is assigned into the memory 5 (step S9). A ratio of occupation of the subsequent second pixel (pixel in the outline forming direction adjacent to the first pixel) is read out (steps S10, S11). The foregoing processes in steps S7 to S10 are repetitively executed. After the assigning process of the brightness for all of the pixels which overlap the outline 302 has been completed (step S10), the pixel of the first brightness is assigned to the areas in the outline which don't overlap the outline 302 (step S12). The pixel pattern 501 shown in Fig. 7 is formed as mentioned above. An image whose shape is not so different from the shape of the outline 302, that is, an image which doesn't largely break the shape of the outline 302 is derived. The pixel pattern 501 in the memory 5 is generated from the output device 9 to the outside (step S13).

As described above, according to the embodiment, a precise pixel pattern (also called an image) which is not so different from the outline even after completion of the modification can be produced.

In the above embodiment, the brightness of the pixel which overlaps the outline has been set to the half brightness of the ordinary brightness and the brightness of the internal pixel which doesn't overlap the outline has been set to the ordinary brightness. However, the invention is not limited to the above example but the brightnesses can be also reversely assigned or the user can also switch and set them.

In the above embodiment, the pixels have been assigned on the basis of two kinds of brightnesses.

However, the invention is not limited to the above example. A pair of two kinds of brightnesses are stored into the brightness information ROM and can be freely selected by the user.

The above embodiment has been described on the assumption that a difference occurs between the original image and the pixel pattern which is formed by the outline after the modification. However, the invention is not limited to such an example but can be also applied in the case of forming a pixel pattern from the outline without modifying.

As described above, according to the invention, for instance, even after the modification, a precise image which doesn't largely differ from the outline can be formed.

## Claims

1. An image processing apparatus comprising:
   memory means for storing a shape of pattern as outline information;
   reading means for reading out the outline information stored in the memory means;
   forming means for assigning one of a plurality of brightnesses to each pixel on the basis of the outline information which has been read out and for forming an image; and
   outputting means for outputting the formed image to an outside.

2. An apparatus according to claim 1, wherein said forming means has assigning means for assigning one of the two kinds of brightnesses for pixel positions excluding pixel positions which overlap the outline and for assigning one of said brightnesses for the pixel positions which overlap the outline.

3. An apparatus according to claim 2, wherein said assigning means includes means for deciding one brightness for the pixel positions which overlap the outline in accordance with a ratio of the occupation on a pixel unit basis.

4. An apparatus according to claim 1, further comprising forming means for forming modification outline information on the basis of the outline information which has been read out.

5. An apparatus according to claim 4, wherein said forming means includes assigning means for assigning one of said plurality of brightnesses for pixel positions excluding pixel positions which overlap the outline in inner areas of the outline which is formed by the outline information and for assigning one of said plurality of brightnesses for the pixel positions which overlap the outline.

6. An apparatus according to claim 5, wherein said assigning means includes means for deciding one of said plurality of brightnesses for the pixel positions which overlap the outline in accordance with a ratio of occupation by said internal areas on a pixel unit basis.

7. An apparatus according to claim 1, wherein said forming means includes means for forming a dot pattern on the basis of the outline information which has been read out by said reading means.

8. An image processing method comprising the steps of:

assigning one of a plurality of brightnesses on the basis of outline information indicative of a shape of pattern;

forming a dot pattern; and

outputting the formed dot pattern.

9. A method according to claim 8, wherein said brightness is determined on the basis of a ratio of occupation by internal areas on a pixel unit basis for pixel positions which overlap an outline portion.

10. A method accoring to claim 8, wherein said brightness is assigned after the dot pattern was formed on the basis of the outline information.

11. A method or apparatus for processing image outline information into image pixel density information in which pixel densities are established for pixels which are partly occupied by the image as defined by the image outline information from a range of possible pixel densities including a maximum density, a minimum density and at least one intermediate density.

FIG. 1

EP 0 458 571 A2

FIG. 2

FIG. 3

FIG. 4

FIG. 5

FIG. 6

FIG. 7

FIG. 8